# EUROPÄISCHE PATENTSCHRIFT

(11) **EP 2 798 897 B1**
(45) Veröffentlichungstag und Bekanntmachung des Hinweises auf die Patenterteilung: **11.07.2018**
(21) Anmeldenummer: 12788150.6
(22) Anmeldetag: 29.10.2012
(51) Int. Cl.: H04W 72/12, H04W 52/02

(54) **KOMMUNIKATIONSSYSTEM MIT STEUERUNG DES ZUGRIFFS AUF EIN GEMEINSAMES KOMMUNIKATIONSMEDIUM**
COMMUNICATIONS SYSTEM WITH CONTROL OF ACCESS TO A SHARED COMMUNICATIONS MEDIUM
SYSTÈME DE COMMUNICATION AVEC GESTION DE L'ACCÈS À UN MOYEN DE COMMUNICATION COMMUN

(30) Priorität: 29.12.2011 DE 102011090110
(43) Veröffentlichungstag der Anmeldung: 05.11.2014
(73) Patentinhaber: Robert Bosch GmbH, 70442 Stuttgart (DE)
(72) Erfinder: BLASCHKE, Volker, 71642 Ludwigsburg (DE); BURGRSCHEIDLIN, Christoph, 81667 Muenchen (DE); BARISIC, Daniel, 85540 Haar (DE); GRUBER, Tobias, 81825 Muenchen (DE); MUELLERR, Andreas, 71336 Waiblingen (DE); KLINGLER, Florian, 81825 Muenchen (DE); PFEFFERSEDER, Anton, 82054 Sauerlach (DE); LOTHSPEICH, Timo, 70839 Gerlingen (DE)
(86) Internationale Anmeldenummer: PCT/EP2012/071402
(87) Internationale Veröffentlichungsnummer: WO 2013/097962

(56) Entgegenhaltungen:
- EP-A2- 1 357 704
- US-A1- 2006 203 841
- US-A1- 2006 285 515

## Beschreibung

Die vorliegende Erfindung betrifft ein Kommunikationssystem, bei dem der Zugriff auf ein von mehreren Knoten gemeinsam genutztes Kommunikationsmedium geeignet gesteuert ist. Die Erfindung betrifft zudem Verfahren der Steuerung des Zugriffs auf ein Kommunikationsmedium.

### Stand der Technik

In vielen Kommunikationssystemen können mehrere Knoten über ein gemeinsames Kommunikationsmedium miteinander kommunizieren. Dabei muss sichergestellt werden, dass verschiedene Nutzer getrennt werden können. Sofern mehrere Nutzer unkontrolliert gleichzeitig Daten übertragen, ist gegebenenfalls keine sinnvolle Detektion einzelner Nutzer möglich. Daher ist eine Steuerung des Zugriffs auf das gemeinsame Medium ein wichtiges Element der Kommunikationstechnik.

In sogenannten "konkurrierenden Verfahren" stehen die verschiedenen Knoten des Systems im Wettbewerb um den Zugriff auf das gemeinsame Kommunikationsmedium. Beispiele für solche Verfahren sind Carrier Sense Multiple Access (CSMA), ALOHA sowie Slotted ALOHA.

Bei gleichzeitigen Zugriffsversuchen unterschiedlicher Teilnehmer können bei Verwendung dieses Verfahrens jedoch Kollisionen auftreten. Insbesondere bei Systemen mit einer Vielzahl von Teilnehmern und/oder einem hohen Verkehrsaufkommen kann dies einen geringeren (akkumulierten) Datendurchsatz zur Folge haben. Auch können harte Echtzeitanforderungen nur sehr schwer bzw. gar nicht garantiert werden. Erfolgt die Energieversorgung der Teilnehmer über das gemeinsame Kommunikationsmedium selbst, können darüber hinaus gleichzeitige Zugriffsversuche verschiedener Teilnehmer auch unter diesem Gesichtspunkt problematisch sein. Dies kann insbesondere dann der Fall sein, wenn die maximale Leistungsaufnahme beschränkt ist, beispielsweise aus Sicherheitsgründen, da die Leistungsaufnahme im Sendemodus zumeist höher ist als im Empfangsmodus.

Hingegen können Kollisionen bei einer Verwendung von sogenannten "koordinierten Verfahren" im fehlerfreien Fall vermieden werden. Dabei erfolgt eine definierte, exklusive Zuweisung verschiedener Ressourcen an verschiedene Teilnehmer. Dies können Zeitschlitze, Frequenzbereiche, Codes bei einem Codemultiplexverfahren oder Ähnliches sein. Die Koordination erfolgt dabei üblicherweise entweder durch eine zentrale Instanz (wie bei klassischen Polling- bzw. Schedulingverfahren), mit Hilfe eines verteilten Ansatzes (wie es beispielsweise bei "Token Ring" oder "Token Bus" der Fall ist) oder mittels einer statischen Konfiguration (wie z.B. bei statischen Zeitmultiplexverfahren).

Ein typisches Beispiel für ein koordiniertes Medienzugriffsverfahren ist ein klassischer Polling-Ansatz, bei dem eine zentrale Instanz als Koordinator die verschiedenen Teilnehmer des Systems zyklisch abfragt, ob sie Daten zu übertragen haben. Gegebenenfalls gewährt die zentrale Instanz dann temporär den Zugriff auf das gemeinsame Kommunikationsmedium.

Bei der Verwendung eines spektral effizienten Verfahrens, das in der Regel eine relativ hohe Komplexität aufweist (beispielweise hinsichtlich der verwendeten Kodierungs- bzw. Modulationsverfahren), ist normalerweise eine vergleichsweise hohe Energiezufuhr notwendig. Dies ist insbesondere empfangsseitig der Fall, wo es auch die größte Auswirkung hat, weil man in der Regel sehr viel mehr empfangende bzw. empfangsbereite Teilnehmer hat als sendende.

Solch eine hohe Energiezufuhr ist oftmals aber nicht erwünscht. Sie kann typischerweise jedoch nur durch Einsatz eines relativ einfachen, dafür aber nicht effizienten Übertragungsverfahrens vermieden werden. Insbesondere im Fall von eingebetteten Kommunikationssystemen und Sensornetzwerken, bei denen nur sehr begrenzte Ressourcen zur Verfügung stehen, wird eine Senkung von Energiekosten und eine Erhöhung der maximal möglichen Betriebsdauer von batteriebetriebenen Geräten angestrebt.

Eine Minimierung des Energiebedarfs ist zudem dann von Bedeutung, wenn die verschiedenen Knoten über das gemeinsame Kommunikationsmedium selbst mit Energie versorgt werden. Ein niedrigerer Energiebedarf eines einzelnen Knotens erlaubt dann, dass entsprechend mehr Knoten an das System angeschlossen werden können, was letzten Endes in der Regel wieder zu geringeren Gesamtkosten führt.

Gemäß bekannten Kommunikationssystemen muss man also einen Kompromiss zwischen akkumulierter Leistungsaufnahme und erreichbarer Leistungsfähigkeit eingehen. Verwendet man ein komplexes, ausgefeiltes Übertragungsverfahren, kann man ggf. hohe Datenraten und geringe Latenzen erzielen, hat dafür aber eine relativ hohe Gesamtleistungsaufnahme, weil alle Teilnehmer immer versuchen müssen, entsprechende Signale zu detektieren.

Aus der EP 1 357 704 A2 ist ein Verfahren für eine leistungseffiziente Kanalzuteilung in einem drahtlosen Netzwerk bekannt. Ein Access Point oder Host-Computer weist einen Host-Transceiver zum Empfangen von Steuerinformationen von den drahtlosen Computereinrichtungen über einen Low-Power-Kanal auf. Basierend auf den empfangenen Steuerinformationen wendet der Zugangspunkt einen Kanalzuteilungs-Algorithmus an, um den Kanalzugriff für die drahtlosen Computereinrichtungen zuzuteilen, damit diese gemäß dieser Zuteilung Daten über den primären Kommunikationskanal übertragen können. Die drahtlosen Computereinrichtungen weisen ein Low-Power-Radio auf, mit dem sie während sonstiger Inaktivität Zuteilungsinformationen über den Low-Power-Kanal empfangen können. Wenn eine drahtlose Computereinrichtung eine Kanalzuteilungsinformation empfängt, aktiviert sie ihre primären Kanal-Netzwerk-Schnittstellen-Komponenten, um Daten über den primären Kanal zu übertragen. Wenn die Computereinrichtung inaktiv ist, wird das Gerät derart konfiguriert, dass alle seine Komponenten bis auf den Schaltkreis zur Versorgung des Low-Power-Kanals mit Energie heruntergefahren werden. So wird der Low-Power-Kanal in einem aktiven Zustand zum Empfangen von Zuteilungsinformationen gehalten.

Aus der US 2006/203841 A1 ist ein Verfahren zur Koordination mehrerer Protokolle unter Verwendung eines gemeinsam genutzten Kommunikationsmediums bekannt. Das Verfahren beginnt mit der Bestimmung durch ein erstes Protokoll-Modul, ob ein zweites Protokoll-Modul Zugriff auf das gemeinsame Kommunikationsmedium verlangt. Das Verfahren wird fortgesetzt mit der Übertragung von mindestens einem Segment eines Übertragungsrahmens durch das erste Protokoll-Modul. Dieses mindestens eine Segment eines Übertragungsrahmens enthält dabei eine Angabe einer Zeitdauer, während der auf das gemeinsam genutzte Kommunikationsmedium zugegriffen werden soll, wobei der Rahmen in Einklang mit dem dem ersten Protokoll ist. Das Verfahren wird fortgesetzt, indem das erste Protokoll-Modul den Zugriff auf das gemeinsam genutzte Kommunika tionsmedium an das zweite Protokoll-Modul für zumindest einen Teil der Zeitdauer übergibt, während der auf das gemeinsame Kommunikationsmedium zugegriffen wird, so dass das zweite Protokoll-Modul mit vernachlässigbaren Störungen durch Geräte gemäß dem ersten Protokoll auf das gemeinsam genutzte Kommunikationsmedium zugreifen kann.

Aus der US 2006/285515 A1 ist ein Verfahren zur effizienten Bereitstellung von Zuteilungsinformationen bekannt. Zugangsterminals können Zuteilungssinformationen in zweistufigen Anfragen übertragen. Zum Beispiel können grobe Kanalzuteilungsinformationen über einen dedizierten Außerbandkanal und feine Kanalzuteilungsinformationen über einen In-Band-Kanal übertragen werden.

Aufgabe der vorliegenden Erfindung ist es, ein Kommunikationssystem bereitzustellen, das den Zugriff auf ein Kommunikationsmedium mit einem koordinierten Medienzugriffsverfahren steuert und dabei eine relativ hohe Datenrate bei niedriger Energieaufnahme durch die verschiedenen Knoten und durch das System insgesamt realisiert.

### Offenbarung der Erfindung

Erfindungsgemäß werden ein Kommunikationssystem und zwei Verfahren mit den Merkmalen der unabhängigen Patentansprüche vorgeschlagen.

Das erfindungsgemäße Kommunikationssystem umfasst einen, zwei oder mehr Knoten, eine Steuerungsinstanz und ein gemeinsames Kommunikationsmedium. Hierbei kann jeder Knoten des Kommunikationssystems über das Kommunikationsmedium mit der Steuerungsinstanz und/oder mit einem anderen Knoten kommunizieren. Das Kommunikationsmedium kann beispielsweise ein linearer Bus oder ein drahtloser Übertragungskanal sein. Vorzugsweise können alle Knoten die gleichen Ressourcen für eine Datenübertragung nutzen, also z.B. die gleichen Frequenzen auf einer elektrischen Leitung oder die gleichen Wellenlängen bei einem Lichtwellenleiter.

In einer Ausführungsform kann die Steuerungsinstanz selbst ggf. gleichzeitig auch die Rolle eines Knotens einnehmen und/oder beispielsweise als Gateway zu einem anderen System dienen.

Die Knoten sind eingerichtet, Nachrichten zu empfangen, die in einem ersten Übertragungsmodus über das Kommunikationsmedium versandt werden oder wurden. Die Knoten befinden sich damit in einem ersten Empfangsmodus, d.h. dem Modus, der den Empfang von Daten in dem ersten Übertragungsmodus unterstützt. Vorteilhafterweise können die Knoten zudem auch Nachrichten im ersten Übertragungsmodus über das Kommunikationsmedium versenden.

Erfindungsgemäß ist ferner die Steuerungsinstanz eingerichtet, einen ersten der Knoten zu bestimmen bzw. auszuwählen, um ihm Daten in einem zweiten Übertragungsmodus zu senden oder um ihm das gemeinsame Kommunikationsmedium zum Senden von Daten in einem zweiten Übertragungsmodus freizugeben. In beiden Fällen teilt die Steuerungsinstanz dem Knoten die entsprechende Bestimmung bzw. Auswahl in einer Nachricht mit. Diese Nachricht wird im ersten Übertragungsmodus versandt.

Die Bestimmung bzw. Auswahl kann beispielsweise zyklisch im Durchlauf durch alle oder einen Teil der Knoten erfolgen (beispielsweise derjenigen Knoten, die ihre Energie über das gemeinsame Kommunikationsmedium beziehen) oder basierend auf dem jeweiligen Bedarf. Den einzelnen Knoten kann auch eine Rangfolge zugeordnet sein, die bei der Bestimmung berücksichtigt wird. So können höhergeordnete Knoten häufiger bestimmt werden als Knoten niedrigeren Ranges, oder der Bedarf höhergeordneter Knoten kann bevorzugt zu einer Bestimmung führen.

Die Steuerungsinstanz kann auch eingerichtet sein, dynamisch den ersten oder zweiten Übertragungsmodus auszuwählen, beispielsweise in Abhängigkeit von der Größe oder Länge einer entsprechenden Nachricht, von Echtzeitanforderungen oder Ähnlichem.

Analog kann der bestimmte Knoten eingerichtet sein, dynamisch einen der beiden Übertragungsmodi abhängig von z.B. einem oder mehreren der genannten Parametern Größe/ Länge der Nachricht oder Echtzeitanforderungen zum Senden einer Nachricht auszuwählen.

Die beiden Übertragungsmodi werden dabei jeweils beispielsweise durch das oder die jeweilige(n) Kodierungs- bzw. Modulationsverfahren und/oder die Datenübertragungsrate definiert. Erfindungsgemäß erlaubt der zweite Übertragungsmodus eine höhere Datenübertragungsrate und/oder Übertragungskomplexität als der erste.

Übertragungsrate und -komplexität können unabhängig voneinander sein oder zumindest voneinander unabhängige Aspekte oder Parameter aufweisen. Häufig korrelieren jedoch die Komplexität eines Übertragungsverfahrens und die damit erzielbare Datenübertragungsrate, so dass ein zweiter Übertragungsmodus, der eine höhere Übertragungskomplexität erlaubt als ein erster Übertragungsmodus, automatisch auch eine höhere Datenübertragungsrate aufweist als der erste Übertragungsmodus. Im Gegenzug kann aber die benötigte Leistungsaufnahme zur Detektion und Verarbeitung eines im ersten Übertragungsmodus versandten Signals geringer sein als die benötigte Leistungsaufnahme zur Detektion und Verarbeitung eines im zweiten Übertragungsmodus versandten Signals.

Geeignet für ein Verfahren gemäß dem ersten Übertragungsmodus ist beispielsweise eine unkodierte binäre Frequenzumtastung (Frequency Shift Keying, FSK). Sie kann mit einem vergleichsweise geringen Energiebedarf empfangen und detektiert werden. Geeignet für ein Verfahren gemäß dem zweiten Übertragungsmodus ist z.B. ein kodiertes orthogonales Frequenzmultiplexverfahren (Orthogonal Frequency Division Multiplex, OFDM), ggf. kombiniert mit adaptivem Bit Loading. Insbesondere Nachrichten höherer Protokollschichten können von dem Knoten oder von der Steuerungsinstanz im zweiten Übertragungsmodus versendet werden.

Über die Freigabe des gemeinsamen Kommunikationsmediums an den ersten Knoten steuert die Steuerungsinstanz also den Zugriff des/der Knoten(s) auf das Kommunikationsmedium, mit Hilfe dessen der erste Knoten mit der Steuerungsinstanz als zentrale Instanz und ggf. mehrere Knoten miteinander kommunizieren können.

Wie bei einem klassischen Polling-Verfahren kann die Steuerungsinstanz dabei einen exklusiven Zugriff auf das gemeinsame Kommunikationsmedium gewähren. Im Gegensatz zu klassischen Pollingverfahren werden hierbei allerdings zwei verschiedene Übertragungsverfahren verwendet, nämlich einerseits ein Verfahren, das sowohl sende- als auch empfangsseitig mit einer relativ geringen Komplexität eingesetzt werden kann, und andererseits ein Verfahren, das vor allem empfangsseitig mit einer höheren Signalverarbeitungskomplexität und infolgedessen einer höheren Energieaufnahme einhergeht.

Der durch das erfindungsgemäße Kommunikationssystem verwirklichte Ansatz hat verschiedene Vorteile:
So weist das System eine vergleichsweise geringe (akkumulierte) Gesamtenergieaufnahme auf, weil jeder dieser Knoten standardmäßig zunächst nur eine Übertragung im ersten Übertragungsmodus erwartet. Diese Knoten machen von dem komplexeren und daher mit einem höheren Energiebedarf einhergehenden zweiten Übertragungsmodus insbesondere nur dann Gebrauch, wenn es wirklich notwendig ist. Insbesondere empfangsseitig kann so Energie eingespart werden. Weitere Knoten, die standardmäßig im zweiten Empfangsmodus sind und zusätzlich im Kommunikationssystem enthalten sein können, werden weiter unten beschrieben.

Darüber hinaus kann durch die Option, dynamisch den Übertragungsmodus wechseln zu können, trotz der relativ geringen Gesamtenergieaufnahme eine hohe Datenrate realisiert werden. Dies ist unter anderem dann der Fall, wenn Daten höherer Protokollschichten übertragen werden sollen, die üblicherweise einen Großteil der zu übertragenden Datenmenge ausmachen.

Schließlich ist ein deterministisches, d.h. zumindest in gewissen Grenzen vorherzusehendes Verhalten zur Verfügung gestellt, weil der Medienzugriff generell durch die Steuerungsinstanz als zentrale Instanz gesteuert wird und sichergestellt werden kann, dass maximal ein Knoten oder eine maximal gewünschte Anzahl von Knoten im zweiten Übertragungsmodus sendet und/oder im zweiten Empfangsmodus ist, d.h. im zweiten Übertragungsmodus versandte Nachrichten empfangen kann. Damit ist es möglich, eine Energieversorgung des Systems über die Steuerungsinstanz auf diesen Fall auszulegen und somit deutlich mehr Knoten zu unterstützen, als dies bei einem nichtdeterministischen bzw. konkurrierenden Medienzugriffsverfahren (wie z.B. Carrier Sense Multiple Access, CSMA) der Fall wäre.

Vorteilhafterweise kann der erste Knoten im ersten Empfangsmodus keine Nachrichten empfangen, die gemäß dem zweiten Übertragungsmodus versandt wurden, ist aber eingerichtet, auf eine entsprechende Mitteilung hin in einen zweiten Empfangsmodus zu wechseln. In diesem zweiten Empfangsmodus kann der erste Knoten dann Daten oder Nachrichten empfangen, die im zweiten Übertragungsmodus versandt wurden.

Vorzugsweise umfasst die Nachricht, mit der die Steuerungsinstanz dem ersten Knoten mitteilt, dass sie ihn bestimmt hat, eine Angabe darüber, ob die Steuerungsinstanz dem Knoten Daten senden wird oder ob sie ihm das Kommunikationsmedium zum Versenden von Daten im zweiten Übertragungsmodus freigibt. Diese Nachricht wird im ersten Übertragungsmodus versandt, so dass der erste Knoten sie im ersten Empfangsmodus empfangen kann. Auf die Nachricht hin kann der erste Knoten in den zweiten Empfangsmodus wechseln, um Daten zu empfangen, die im zweiten Übertragungsmodus versandt wurden.

Nach dem Erhalt der Daten wechselt der erste Knoten vorzugsweise wieder in den ersten Empfangsmodus. So kann ein niedriger Energieverbrauch des ersten Knotens wiederhergestellt und der Energieverbrauch insgesamt optimiert werden.

Vorteilhafte Ausgestaltungen sind Gegenstand der Unteransprüche sowie der nachfolgenden Beschreibung.

Vorzugsweise ist der erste Knoten eingerichtet, auf die Nachricht, dass das Kommunikationsmedium für ihn zum Senden und/oder Empfangen von Daten im zweiten Übertragungsmodus freigegeben ist oder wird, entsprechend seinem Bedarf zu reagieren:
Beispielsweise kann der erste Knoten im Fall, dass er keine Daten zu versenden hat, dies der Steuerungsinstanz in einer Mitteilung anzeigen. Diese Mitteilung kann im ersten oder im zweiten Übertragungsmodus versandt werden, vorteilhafterweise ist eine Übertragung in demjenigen Übertragungsmodus vorgesehen, der eine schnellere Übertragung gewährleistet. Der erste Knoten kann dabei eingerichtet sein, den Übertragungsmodus auszuwählen.

Vorzugsweise ist der erste Knoten eingerichtet, die genannte Mitteilung innerhalb eines vordefinierten Zeitraums oder zu einer vordefinierten Zeit nach dem Empfangen der Nachricht über die Freigabe zu versenden. Vorteilhafterweise endet die Freigabe des Kommunikationsmediums für den ersten Knoten mit dem Empfang dieser Mitteilung durch die Steuerungsinstanz. Diese hat dann gegebenenfalls die Möglichkeit, beispielsweise selbst Daten zu versenden oder das Kommunikationsmedium entsprechend für einen anderen Knoten oder für eine andere Aktion desselben Knotens freizugeben.

Falls der erste Knoten Daten im zweiten Übertragungsmodus an die Steuerungsinstanz zu versenden hat, kann er diese Daten direkt an die Steuerungsinstanz unter Verwendung des zweiten Übertragungsmodus' senden. Durch eine Kennzeichnung im Header dieser Datensendung kann diese von der oben beschriebenen Mitteilung darüber, dass der erste Knoten keinen Sendebedarf hat, unterschieden werden. Im Sinne der Steuerungseffizienz ist es auch in diesem Fall vorteilhaft, wenn der erste Knoten eingerichtet ist, die Datensendung innerhalb eines vordefinierten Zeitraums oder zu einer vordefinierten Zeit nach dem Empfangen der Nachricht über die Freigabe zu versenden.

Im Falle, dass der erste Knoten Daten im zweiten Übertragungsmodus an einen anderen Knoten im Kommunikationssystem zu versenden hat, kann er auf die Nachricht über die Freigabe reagieren, indem er den anderen Knoten entsprechend informiert. Dies erfolgt vorzugsweise in Form einer Ankündigungsnachricht, die der erste Knoten an den anderen Knoten im ersten Übertragungsmodus versendet und die eine nachfolgende Datensendung im zweiten Übertragungsmodus an den anderen Knoten ankündigt. Der andere Knoten kann sich dann auf einen Empfangsmodus umstellen, der das Empfangen von Daten erlaubt, die im zweiten Übertragungsmodus versandt wurden bzw. werden.

In einer bevorzugten Ausführungsform ist der erste Knoten eingerichtet, die Daten im zweiten Übertragungsmodus innerhalb eines vorbestimmten Zeitraums oder zu einem vorbestimmten Zeitpunkt nach dem Versenden der Ankündigungsnachricht zu versenden. Alternativ oder zusätzlich kann der erste Knoten in der Ankündigungsnachricht angeben, wann die Datensendung erfolgen wird.

Beide Versionen bieten den Vorteil, dass der andere Knoten den Zeitpunkt vorhersehen kann, an dem die Datensendung eintrifft. Der andere Knoten kann so seine Umstellung des Empfangsmodus und damit seinen Energieverbrauch genauer zeitlich optimieren. Darüber hinaus kann die Steuerungsinstanz gemäß dieser Ausführungsform vorhersehen, wann die Datensendung erfolgt sein wird.

In einer vorteilhaften Ausführungsform ist die Freigabe des Kommunikationsmediums für den ersten Knoten zeitlich befristet.

Vorteilhafterweise endet dabei die Freigabe des Kommunikationsmediums an den ersten Knoten, wenn Daten, die der erste Knoten im zweiten Übertragungsmodus versendet, vollständig übertragen wurden. Die Steuerungsinstanz kann das Ende dieser Übertragung dabei prinzipiell auf verschiedene Arten detektieren. Einerseits kann sie mit Hilfe von sogenanntem "Carrier Sensing" ähnlich wie bei CSMA permanent kontrollieren, wann das Kommunikationsmedium nicht mehr belegt wird. Andererseits könnte die Steuerungsinstanz aber auch die Ankündigungsnachricht und/oder die eigentliche, im zweiten Übertragungsmodus erfolgende Datenübertragung mithören und auswerten und aufgrund darin ggf. enthaltener Zeitangaben das Ende der Datenübertragung ermitteln. Alternativ oder zusätzlich kann die Steuerungsinstanz eingerichtet sein, die Länge und damit die Übertragungsdauer bzw. das Ende der Übertragung einer Nachricht aus deren Typ oder der Anzahl der zu übertragenden Bits bestimmen, falls diese/r der Steuerungsinstanz vorliegt, beispielsweise vom sendenden Knoten mitgeteilt wurde oder bei der Freigabe des Kommunimationsmediums von der Steuerungsinstanz selbst festgelegt wurde.

Alternativ kann die Freigabe des Kommunikationsmediums an den ersten Knoten nach Ablauf einer bestimmten Zeitdauer ab dem Empfangen der Nachricht über die Freigabe enden. Dies bietet den Vorteil, dass das Kommunikationssystem im Fall eines Übertragungsfehlers und/oder Verarbeitungsfehlers nicht blockiert wird. Die Zeitdauer kann vordefiniert sein oder dem ersten Knoten in der Nachricht über die Freigabe mitgeteilt werden.

Schließlich kann die Freigabe enden, wenn die Steuerungsinstanz dem ersten Knoten eine entsprechende Nachricht gibt, beispielsweise nachdem ein anderer, in einer vordefinierten Rangordnung höherstehender Knoten Bedarf an dem Kommunikationsmedium angemeldet hat.

In einer anderen Ausführungsform der Erfindung endet die Freigabe erst dann, wenn der erste Knoten den Zugriff auf das Kommunikationsmedium explizit wieder an die Steuerungsinstanz zurückgibt, beispielsweise durch das Setzen eines entsprechenden Flags oder mit Hilfe einer geeigneten Nachricht. Für eine solche Nachricht kann eine Übertragung im ersten oder im zweiten Übertragungsmodus vorgesehen oder vom ersten Knoten gewählt werden. Die Auswahl erfolgt dabei vorzugsweise so, dass eine Reduktion des Gesamtenergiebedarfs erreicht wird. Darüber hinaus sind auch Kombinationen dieser Ansätze denkbar.

In einer Ausführungsform der Erfindung ist der erste Knoten eingerichtet, nach einem Empfangen einer Nachricht über die Freigabe zunächst die Steuerungsinstanz in einer Mitteilung zu informieren, wenn er Daten im zweiten Übertragungsmodus an einen anderen Knoten zu übermitteln hat. Diese Mitteilung kann im ersten oder zweiten Übertragungsmodus versandt werden, eine Auswahl desselben kann durch das Kommunikationssystem festgelegt sein, oder der erste Knoten kann eingerichtet sein, den Übertragungsmodus selbst auszuwählen.

Die Steuerungsinstanz kann eingerichtet sein, nach Erhalt der Mitteilung zu entscheiden, ob sie dem Wunsch des Knotens nachkommt oder nicht, d.h. ob sie dem Knoten das Kommunikationsmedium für das Versenden der Daten im zweiten Übertragungsmodus an den anderen Knoten freigibt. Die zuvor erfolgte Freigabe ist somit nur eine bedingte, und die Steuerungsinstanz hat eine Kontrolle darüber, wofür der erste Knoten das Kommunikationsmedium tatsächlich nutzt.

Die Steuerungsinstanz kann weiterhin eingerichtet sein, im Falle, dass sie der Übertragung an den anderen Knoten nicht zustimmt, entweder einfach die nächste geplante Aktion durchzuführen oder dem ersten Knoten die Zurückweisung des Übertragungswunsches mit Hilfe einer geeigneten Nachricht (die im ersten oder zweiten Übertragungsmodus versandt wird) zu signalisieren. Stimmt die Steuerungsinstanz dem Übertragungswunsch des ersten Knotens hingegen zu, so könnte sie mit Hilfe einer weiteren Nachricht die Zustimmung anzeigen und somit die direkte Datenübertragung von dem ersten Knoten an den anderen Knoten initiieren. Je nach Ausführungsform kann die weitere Nachricht an den ersten Knoten oder an den anderen Knoten oder an beide Knoten gesendet werden.

In einer Ausführungsform der vorliegenden Erfindung umfasst das Kommunikationssystem einen oder mehrere weitere Knoten, der (die) eingerichtet ist (sind), standardmäßig Nachrichten im zweiten Übertragungsmodus zu empfangen. Auch zum Versenden von Daten im zweiten Übertragungsmodus kann das gemeinsame Kommunikationsmedium standardmäßig für diese(n) weiteren Knoten freigegeben sein.

Diese Ausführungsform ist besonders vorteilhaft, wenn das Kommunikationssystem Knoten eines ersten und eines zweiten Typs umfasst, wobei die Knoten des ersten Typs über das gemeinsame Kommunikationsmedium mit Energie versorgt werden und die des zweiten Typs (also die weiteren) Knoten ihre Energie anderweitig beziehen.

Die Knoten des ersten Typs sollten sich dabei möglichst nur dann wie oben beschrieben auf ein Senden und/oder Empfangen von Daten im zweiten Übertragungsmodus einstellen, wenn sie wirklich entsprechende Daten zu versenden oder empfangen haben. Andernfalls können sich die Knoten des ersten Typs in einem Ruhemodus mit einer geringen Energieaufnahme befinden.

Demgegenüber spielt eine Energieersparnis für die Knoten des zweiten Typs, die ihre Energie nicht über das gemeinsame Kommunikationsmedium beziehen, eine weniger wichtige Rolle. Diese Knoten können daher dann standardmäßig den zweiten Übertragungsmodus verwenden.

Beispielsweise während einer gesonderten Initialisierungsphase kann die Information darüber, welches der Standardempfangsmodus eines Knotens ist (d.h. zu welchem Typ der Knoten gehört), der Steuerungsinstanz mitgeteilt oder von ihr festgelegt werden. In einer Ausführungsform durchläuft das Kommunikationssystem eine erste Initialisierungsphase, in der eine Einteilung der Knoten in Knoten des ersten und des zweiten Typs erfolgt, für die dann eine Verwendung des ersten bzw. zweiten Übertragungsmodus als Grundeinstellung festgelegt wird. In einer späteren, zweiten Initialisierungsphase kann dann die Typenaufteilung der Knoten neu festgelegt werden, d.h. jeder Knoten kann neu als zum ersten oder der zweiten Typ zugehörig bestimmt und der von dem Knoten zu verwendende Übertragungsmodus entsprechend festgelegt werden.

Die vorliegende Erfindung kann bei einer Vielzahl von drahtgebundenen, drahtlosen und optischen Kommunikationssystemen mit einer zentralen Instanz (Steuerungsinstanz) und einem gemeinsamen Kommunikationssystem eingesetzt werden. Insbesondere ist ein Einsatz der Erfindung in der Gebäudeautomatisierung oder auch in mobilen Anwendungen vorteilhaft.

Gemäß den oben beschriebenen Ausführungsformen sind das Kommunikationssystem, die Steuerungsinstanz und der/die Knoten eingerichtet, die beschriebenen Aktionen durchzuführen. Die vorliegende Erfindung betrifft weiterhin die dabei zugrundeliegenden Verfahren mit den Schritten, die die Steuerungsinstanz und/oder der Knoten jeweils durchführen, wenn das Kommunikationssystem erfindungsgemäß gesteuert ist.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.

### Figurenbeschreibung

Figur 1 zeigt beispielhaft ein Kommunikationssystem, bei dem die vorliegende Erfindung anwendbar ist.
Figur 2 zeigt exemplarisch eine typische Anordnung von Komponenten in einem Kommunikationssystem mit einer linearen Busstruktur.
Figur 3 zeigt eine mögliche Struktur einer Nachricht im ersten Übertragungsmodus, die im Rahmen der vorliegenden Erfindung verwendbar ist.
Figur 4 zeigt eine mögliche Struktur einer Nachricht im zweiten Übertragungsmodus, die im Rahmen der vorliegenden Erfindung verwendbar ist.
Figur 5 zeigt mehrere Sequenzen mit möglichen Nachrichtenflüssen, die im Rahmen der vorliegenden Erfindung einsetzbar sind.

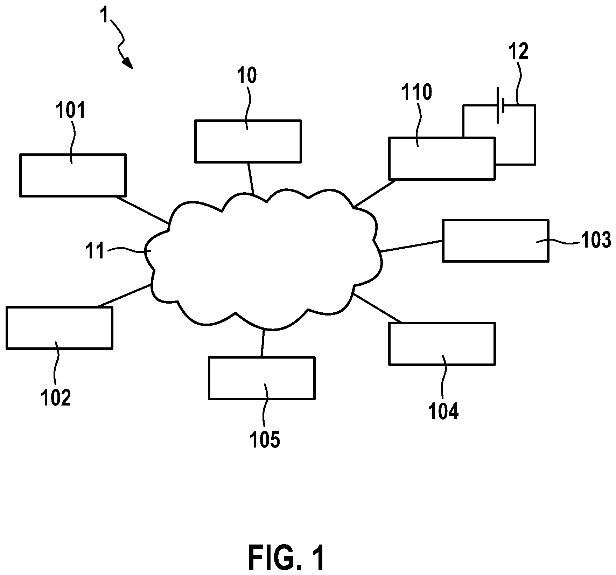

Das in Figur 1 gezeigte Kommunikationssystem 1 weist eine Steuerungsinstanz 10, mehrere Knoten 101, 102, 103, 104, 110 und ein gemeinsames Kommunikationsmedium 11 auf, über das die Knoten und die Steuerungsinstanz miteinander kommunizieren können. Der Knoten 110 weist dabei eine separate, d.h. nicht über das gemeinsame Kommunikationsmedium verlaufende Energieversorgung 11 auf.

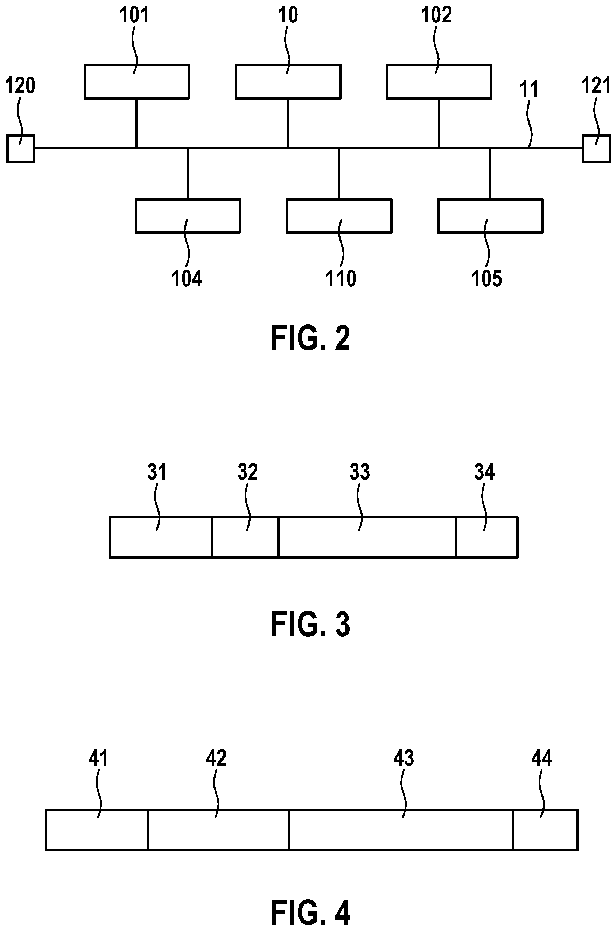

In Figur 2 ist eine mögliche Anordnung der Elemente in dem Kommunikationssystem 1 dargestellt. Das gemeinsame Kommunikationsmedium 11 ist dabei ein linearer Bus, dessen Enden mit 120 und 121 bezeichnet sind.

Die Figur 3 zeigt eine mögliche Struktur für eine Nachricht, die im ersten Übertragungsmodus versandt wird. Die Nachricht setzt sich dabei im Wesentlichen aus einer Präambel 31 zur Synchronisation und ggf. Kanalschätzung zusammen, gefolgt von der Spezifikation 32 des Nachrichtentyps, der Adresse 33 des angesprochenen Knotens sowie ggf. einem Fehlererkennungscode (Cyclic Redundancy Check Code, CRC) 34. Insbesondere könnte die Reihenfolge der genannten Felder auch eine andere sein als die gezeigte.

Eine mögliche Struktur für eine Nachricht, die im zweiten Übertragungsmodus versandt wird, ist exemplarisch in Figur 4 dargestellt. Auch hier umfasst die Struktur eine Präambel 41 zur Synchronisation und ggf. Kanalschätzung, gefolgt von einem Header 42, der ggf. weitere Information über Länge, Inhalt und Absender der Nachricht enthalten kann. Weiterhin sind (sofern vorhanden) die eigentlichen Nutzdaten 43 und schließlich wieder ein Fehlererkennungscode (CRC) 44 enthalten. Auch hier ist die dargestellte Reihenfolge rein exemplarisch.

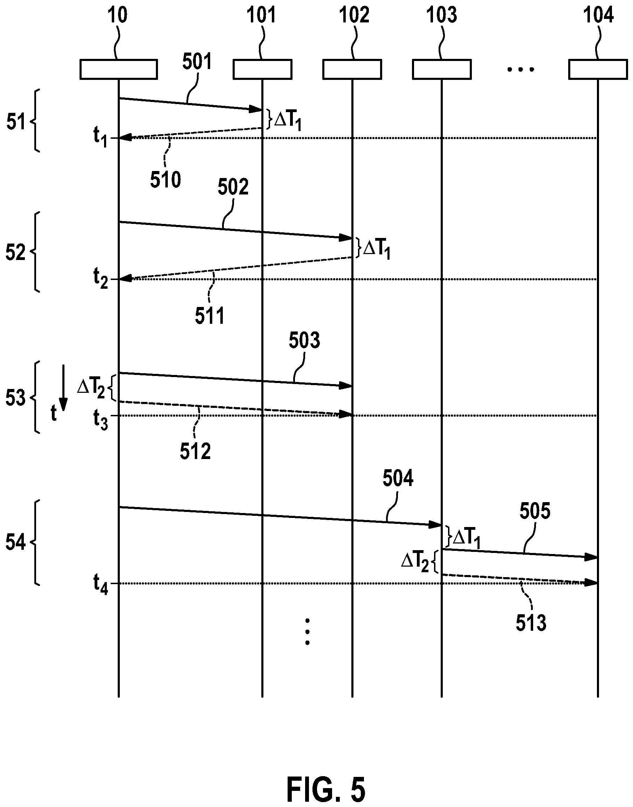

In Figur 5 sind verschiedene mögliche Nachrichtensequenzen 51, 52, 53 und 54 dargestellt, die mit Ablauf der Zeit t zwischen einer Steuerungsinstanz und verschiedenen Knoten ausgetauscht werden können. Es versteht sich, dass der dargestellte Protokollablauf rein exemplarisch ist. Insbesondere kann die Reihenfolge der Sequenzen 51, 52, 53 und 54 beliebig vertauscht sein, einzelne dieser Sequenzen können fehlen oder mehrfach auftreten, und die jeweils angesprochenen Knoten können in mehreren Sequenzen dieselben sein oder weitere, nicht dargestellte Nachrichten können versandt und empfangen werden.

Die mit durchgezogenen Pfeilen dargestellten Nachrichten 501, 502, 503, 504 und 505 werden jeweils im ersten Übertragungsmodus versandt. Demgegenüber ist eine Versendung im zweiten Übertragungsmodus durch gestrichelte Pfeile angedeutet. Dies betrifft die Nachrichten 510, 511, 512 und 513.

Mit den Nachrichten 501, 502 und 504 zeigt die Steuerungsinstanz dem jeweils ausgewählten und angesprochenen Knoten an, dass das gemeinsame Kommunikationsmedium für den Knoten zum Versenden von Daten im zweiten Übertragungsmodus freigegeben ist bzw. wird.

Die Sequenz 51 zeigt die Situation, dass der ausgewählte, angesprochene Knoten 101 keine Daten zu versenden hat und dies der Steuerungsinstanz durch das Senden einer speziellen Nachricht 510 nach einer vordefinierten Zeit ΔT₁ anzeigt. Die Nachricht 510 trifft zum Zeitpunkt t₁ bei der Steuerungsinstanz ein. Mit ihr gibt der Knoten 101 die Kontrolle über das gemeinsame Kommunikationsmedium wieder an die Steuerungsinstanz zurück.

Die genannte spezielle Nachricht 510 versendet der Knoten im zweiten Übertragungsmodus. Dies ist möglich, weil die Steuerungsinstanz in diesem Fall implizit als Empfänger feststeht und somit nicht erst durch eine vorangehende Übertragung im ersten Modus angesprochen werden muss. Alternativ könnte die Nachricht 510 aber auch im ersten Übertragungsmodus versandt werden.

Die Sequenz 52 betrifft die Situation, dass der von der Steuerungsinstanz 10 mit der Nachricht 502 angesprochene Knoten 102 Nachrichten im zweiten Übertragungsmodus zu versenden hat, und zwar an die Steuerungsinstanz. Wiederum nach der vordefinierten Zeit ΔT₁ versendet der Knoten die Daten unter Verwendung des zweiten Übertragungsmodus mit der Nachricht 511 direkt an die Steuerungsinstanz, wo sie zum Zeitpunkt t₂ eintreffen.

Zur Unterscheidung der Nachricht 511, mit der ein Knoten Daten versendet, von Nachrichten, mit denen ein Knoten anzeigt, dass er keine Daten zu versenden hat, kann die Nachricht 511 entsprechende Kennzeichnung innerhalb ihres Headers aufweisen.

Die Steuerungsinstanz 10 hat auch die Möglichkeit, selbst Daten im zweiten Übertragungsmodus an einen Knoten zu übertragen. Wie in der Sequenz 53 gezeigt ist, kündigt die Steuerungsinstanz eine solche Datenübertragung zunächst in einer Nachricht 503 an, die im ersten Übertragungsmodus versandt wird. Nach einer vordefinierten Zeit ΔT₂ sendet die Steuerungsinstanz dann die Daten mit der zum Zeitpunkt t₃ eintreffenden Nachricht 512 im zweiten Übertragungsmodus. Die Kontrolle über das gemeinsame Kommunikationsmittel verbleibt dabei die ganze Zeit bei der Steuerungsinstanz selbst.

Wie oben beschrieben, kann ein bestimmter Knoten nach der Gewährung des Zugriffes auf das gemeinsame Kommunikationsmedium Daten ggf. aber auch direkt an einen anderen Knoten innerhalb des Systems übertragen. Dies ist in Figur 5 mit der Sequenz 54 für den Knoten 103 dargestellt.

Der Knoten 103 empfängt die Nachricht 504 über die Freigabe des gemeinsamen Kommunikationsmediums. Nach Ablauf einer vordefinierten Zeit ΔT₁ kündigt der Knoten 103 dem anderen Knoten 104 die beabsichtigte Datenübertragung in einer Nachricht 505 an. Diese Nachricht wird im ersten Übertragungsmodus versandt. Nach einer vorbestimmten Dauer ΔT₂, die dieselbe sein kann wie ΔT₁ oder eine kürzere oder längere, sendet der Knoten 103 Daten im zweiten Übertragungsmodus an den Knoten 104, wie es durch die Nachricht 513 in Figur 5 angedeutet ist. Der Knoten 104 hat dabei nach Empfang der Nachricht 512 die Zeit ΔT₂ zur Verfügung, um sich auf den Empfang von Daten im zweiten Übertragungsmodus einzustellen. Die Dauer ΔT₂ kann so festgelegt sein, dass sie einen erforderlichen Zeitaufwand des anderen Knotens für die Umstellung vom ersten in den zweiten Empfangsmodus umfasst, ihm entspricht oder ihn um eine vordefinierte Pufferzeit übersteigt.

Im Anschluss an die Datenübertragung 513 geht die Kontrolle über das gemeinsame Kommunikationsmedium zum Zeitpunkt t₄ wieder automatisch an die Steuerungsinstanz über.

## Patentansprüche

1. Kommunikationssystem (1) mit mindestens einem Knoten (101, 102, 110), einer Steuerungsinstanz (10) und einem gemeinsamen Kommunikationsmedium (11),
wobei der mindestens eine Knoten eingerichtet ist, Nachrichten zu empfangen, die in einem ersten Übertragungsmodus versandt wurden bzw. werden;
wobei ferner die Steuerungsinstanz (10) eingerichtet ist, einen ersten der Knoten zu bestimmen,
um ihm Daten in einem zweiten Übertragungsmodus zu senden oder um das gemeinsame Kommunikationsmedium (11) dazu freizugeben, dass der erste Knoten Daten in dem zweiten Übertragungsmodus sendet,
und wobei die Steuerungsinstanz (10) weiterhin eingerichtet ist, dem ersten Knoten mittels einer Nachricht (501, 502, 503, 504) mitzuteilen, dass sie ihn bestimmt hat,
wobei diese Nachricht im ersten Übertragungsmodus versandt wird; und
wobei der zweite Übertragungsmodus eine höhere Datenübertragungsrate und/oder Übertragungskomplexität aufweist als der erste,
wobei der erste Knoten eingerichtet ist, nach einem Empfangen der Nachricht nach Bedarf
Daten im zweiten Übertragungsmodus an die Steuerungsinstanz (10) zu versenden (510);
oder im ersten Übertragungsmodus eine Ankündigungsnachricht (505) an einen anderen Knoten (104) im Kommunikationssystem zu senden sowie nachfolgend Daten im zweiten Übertragungsmodus an den anderen Knoten zu senden (513);
oder Daten zu empfangen (512), die im zweiten Übertragungsmodus versandt wurden bzw. werden.

2. Kommunikationssystem gemäß Anspruch 1, wobei das Freigeben gemeinsamen Kommunikationsmediums zum Versenden von Daten zeitlich begrenzt ist und endet,
wenn der erste Knoten Daten im zweiten Übertragungsmodus versandt hat und diese Daten übermittelt wurden (t₁, t₂, t₄);
oder wenn eine vorbestimmte Zeit (ΔT₁) nach einem Versenden der Nachricht durch die Steuerungsinstanz oder nach einem Empfangen dieser Nachricht durch den ersten Knoten abgelaufen ist;
wenn der erste Knoten der Steuerungsinstanz innerhalb einer vorbestimmten Frist (ΔT₁) in einer Mitteilung (510) angezeigt hat, dass ein Bedarf an der Verwendung des gemeinsamen Kommunikationsmediums im zweiten Übertragungsmodus nicht oder nicht mehr besteht;
oder wenn die Steuerungsinstanz dem Knoten eine entsprechende Nachricht gibt.

3. Kommunikationssystem gemäß Anspruch 1 oder 2, wobei die Steuerungsinstanz den ersten Knoten basierend auf einer Auslastung des gemeinsamen Kommunikationsmediums und/oder basierend auf einem vom ersten Knoten angezeigten Bedarf wie Echtzeitanforderungen oder einer Größe einer zu versendenden Nachricht auswählt.

4. Kommunikationssystem gemäß einem der vorherigen Ansprüche, das mindestens einen zweiten Knoten (110) aufweist, der eingerichtet ist, Nachrichten zu empfangen, die in dem zweiten Übertragungsmodus versandt wurden,
wobei der mindestens eine zweite Knoten vorzugsweise eine Energieversorgung (111) aufweist, die vom gemeinsamen Kommunikationsmedium getrennt ist.

5. Kommunikationssystem gemäß einem der vorherigen Ansprüche, wobei der erste Übertragungsmodus eine Signalübertragung mittels unkodierter binärer Frequenzumtastung umfasst;
und/oder wobei der zweite Übertragungsmodus eine Signalübertragung mittels kodiertem orthogonalem Frequenzmultiplexverfahren umfasst, die vorzugsweise mit einem adaptiven Bit Loading kombiniert ist.

6. Verfahren der Kommunikation in einem Kommunikationssystem (1) mit
mindestens zwei Knoten (101, 102, 103),
einer Steuerungsinstanz (10) und
einem gemeinsamen Kommunikationsmedium (11),
wobei das Verfahren die folgenden, von der Steuerungsinstanz durchzuführenden Schritte umfasst:
Bestimmen eines ersten Knotens; und
Senden einer Nachricht (501, 502, 503, 504) in einem ersten Übertragungsmodus an den ersten Knoten, wobei die Nachricht Information darüber enthält,
dass die Steuerungsinstanz dem ersten Knoten Daten in einem zweiten Übertragungsmodus senden wird; oder
dass die Steuerungsinstanz das gemeinsame Kommunikationsmedium (11) für den Knoten dazu freigibt, Daten in dem zweiten Übertragungsmodus zu versenden;
wobei der zweite Übertragungsmodus eine höhere Datenübertragungsrate und/oder Übertragungskomplexität erlaubt als der erste, wobei der Knoten (103) ein erster Knoten ist und das Kommunikationssystem (1) einen weiteren Knoten (104) umfasst, und wobei das Verfahren weiterhin die folgenden, von dem ersten Knoten durchzuführenden Schritte umfasst:
Versenden einer Mitteilung (505) im ersten Übertragungsmodus an den weiteren Knoten, wobei die Mitteilung eine Datenübertragung im zweiten Übertragungsmodus ankündigt;
und Versenden von Daten (513) im zweiten Übertragungsmodus an den weiteren Knoten.

7. Verfahren gemäß Anspruch 6, das weiterhin einen oder mehrere der folgenden, von dem ersten Knoten (101, 102, 103) durchzuführende Schritte umfasst:
Versenden (510) von Daten in dem zweiten Übertragungsmodus an die Steuerungsinstanz (10);
Empfangen (512) von Daten, die in dem zweiten Übertragungsmodus von der Steuerungsinstanz versandt wurden bzw. werden;
Versenden (510) einer zweiten Nachricht an die Steuerungsinstanz, wobei mit der zweiten Nachricht angezeigt wird, dass der erste Knoten keinen Bedarf oder keinen weiteren Bedarf an der Verwendung des gemeinsamen Kommunikationsmediums im zweiten Übertragungsmodus hat.

8. Verfahren gemäß Anspruch 6 oder 7, wobei das Bestimmen des ersten Knotens auf einer Auslastung des gemeinsamen Kommunikationsmediums und/oder auf einem vom ersten Knoten angezeigten Bedarf wie Echtzeitanforderungen oder einer Größe einer zu versendenden Nachricht (511, 512, 513) basiert.

9. Verfahren gemäß einem der Ansprüche 6 bis 8, das zusätzlich den folgenden von der Steuerungsinstanz (10) durchzuführenden Schritt umfasst:
Festlegen, dass mindestens ein zweiter Knoten standardmäßig Daten empfangen kann, die im zweiten Übertragungsmodus versandt wurden.

10. Verfahren der Kommunikation in einem Kommunikationssystem (1) mit
einem Knoten (101, 102, 103),
einer Steuerungsinstanz (10) und
einem gemeinsamen Kommunikationsmedium (11),
wobei das Verfahren die folgenden, von dem Knoten (101, 102, 103) durchzuführenden Schritte umfasst:
Empfangen einer oder mehrerer Nachricht/en (501, 502, 505) von der Steuerungsinstanz oder einem anderen Knoten in dem Kommunikationssystem, wobei die eine oder die mehreren Nachricht/en in einem ersten Übertragungsmodus versandt wurde/n bzw. wird/werden und eine Information darüber enthält/enthalten,
dass der Knoten Daten empfangen wird, die in einem zweiten Übertragungsmodus versandt werden; und/oder
dass das gemeinsame Kommunikationsmedium (11) für den Knoten zum Senden von Daten im zweiten Übertragungsmodus freigegeben ist;
und Empfangen von in dem zweiten Übertragungsmodus versandten Daten (512, 513) und/oder Versenden (510, 511, 513) von Daten im zweiten Übertragungsmodus;
wobei der zweite Übertragungsmodus eine höhere Datenübertragungsrate und/oder Übertragungskomplexität erlaubt als der erste, wobei der Knoten (103) ein erster Knoten ist und das Kommunikationssystem (1) einen weiteren Knoten (104) umfasst, und wobei das Verfahren weiterhin die folgenden, von dem ersten Knoten durchzuführenden Schritte umfasst:
Versenden einer Mitteilung (505) im ersten Übertragungsmodus an den weiteren Knoten, wobei die Mitteilung eine Datenübertragung im zweiten Übertragungsmodus ankündigt;
und Versenden von Daten (513) im zweiten Übertragungsmodus an den weiteren Knoten.

11. Verfahren nach einem der Ansprüche 6 bis 10, wobei das Verfahren zudem den folgenden, von dem weiteren Knoten (104) auszuführenden Schritt umfasst:
Umstellen von einem ersten Empfangsmodus, in dem nur im ersten Übertragungsmodus versandte Daten empfangen werden können, auf einen zweiten Empfangsmodus, in dem im zweiten Übertragungsmodus versandte Daten empfangen werden können.

12. Ein oder mehrere computerlesbare/s Medium/Medien, auf dem/denen Instruktionen gespeichert sind die, wenn sie auf einem Computer ausgeführt werden, eines der Verfahren der Ansprüche 6 bis 11 durchführen.

13. Computerprogramm mit Programmcode-Mitteln, um alle Schritte von jedem beliebigen der Ansprüche 6 bis 11 durchzuführen, wenn das Programm auf einem Computer ausgeführt wird.

## Claims

1. Communications system (1) comprising at least one node (101, 102, 110), a control entity (10) and a shared communications medium (11),
wherein the at least one node is designed to receive messages which were or are sent in a first transmission mode;
wherein furthermore the control entity (10) is designed to determine a first of the nodes
in order to send data to said first node in a second transmission mode or in order to release the shared communications medium (11) to the effect that the first node sends data in the second transmission mode,
and wherein the control entity (10) is furthermore designed to notify the first node by means of a message (501, 502, 503, 504) that it has determined said first node,
wherein said message is sent in the first transmission mode; and
wherein the second transmission mode has a higher data transmission rate and/or transmission complexity than the first transmission mode,
wherein the first node is designed, after receiving the message, as required,
to send (510) data in the second transmission mode to the control entity (10);
or to send an announcement message (505) to another node (104) in the communications system in the first transmission mode and subsequently to send (513) data in the second transmission mode to the other node;
or to receive (512) data which were or are sent in the second transmission mode.

2. Communications system according to Claim 1, wherein the release of the shared communications medium for sending data is temporally limited and ends
if the first node has sent data in the second transmission mode and these data were communicated (t₁, t₂, t₄);
or if a predetermined time (ΔT₁) has elapsed after sending of the message by the control, entity or after reception of said message by the first node;
if the first node has indicated to the control entity within a predetermined period (ΔT₁) in a notification (510) that there is no requirement or no longer a requirement for the use of the shared communications medium in the second transmission mode;
or if the control entity gives the node a corresponding message.

3. Communications system according to Claim 1 or 2, wherein the control entity selects the first node on the basis of a capacity utilization of the shared communications medium and/or on the basis of a requirement indicated by the first node, such as real-time requirements, or a size of a message to be sent.

4. Communications system according to any of the preceding claims, which comprises at least one second node (110) designed to receive messages which were sent in the second transmission mode,
wherein the at least one second node preferably has an energy supply (111) which is separate from the shared communications medium.

5. Communications system according to any of the preceding claims, wherein the first transmission mode comprises a signal transmission by means of uncoded binary frequency shift keying;
and/or wherein the second transmission mode comprises a signal transmission by means of a coded orthogonal frequency division multiplex method, which signal transmission is preferably combined with an adaptive bit loading.

6. Method of communication in a communications system (1) comprising
at least two nodes (101, 102, 103),
a control entity (10) and
a shared communications medium (11),
wherein the method comprises the following steps to be carried out by the control entity:
determining a first node; and
sending a message (501, 502, 503, 504) in a first transmission mode to the first node, wherein the message contains information about the fact
that the control entity will send data in a second transmission mode to the first node; or
that the control entity is releasing the shared communications medium (11) for the node to send data in the second transmission mode;
wherein the second transmission mode allows a higher data transmission rate and/or transmission complexity than the first transmission mode,
wherein the node (103) is a first node and the communications system (1) comprises a further node (104), and wherein the method furthermore comprises the following steps to be carried out by the first node:
sending a notification (505) in the first transmission mode to the further node, wherein the notification announces a data transmission in the second transmission mode;
and sending data (513) in the second transmission mode to the further node.

7. Method according to Claim 6, which furthermore comprises one or more of the following steps to be carried out by the first node (101, 102, 103):
sending (510) data in the second transmission mode to the control entity (10);
receiving (512) data which were or are sent by the control entity in the second transmission mode;
sending (510) a second message to the control entity, wherein the second message indicates that the first node has no requirement or no further requirement for the use of the shared communications medium in the second transmission mode.

8. Method according to Claim 6 or 7, wherein determining the first node is based on a capacity utilization of the shared communications medium and/or on a requirement indicated by the first node, such as real-time requirements, or a size of a message (511, 512, 513) to be sent.

9. Method according to any of Claims 6 to 8, which additionally comprises the following step to be carried out by the control entity (10):
stipulating that at least one second node can receive as standard data which were sent in the second transmission mode.

10. Method of communication in a communications system (1) comprising
a node (101, 102, 103),
a control entity (10) and
a shared communications medium (11),
wherein the method comprises the following steps to be carried out by the node (101, 102, 103):
receiving one or a plurality of message(s) (501, 502, 505) from the control entity or another node in the communications system, wherein the one or the plurality of message(s) was/were or is/are sent in a first transmission mode and contains/contain information about the fact
that the node will receive data which are sent in a second transmission mode; and/or
that the shared communications medium (11) is released for the node for sending data in the second transmission mode;
and receiving data sent in the second transmission mode (512, 513) and/or sending (510, 511, 513) data in the second transmission mode;
wherein the second transmission mode allows a higher data transmission rate and/or transmission complexity than the first transmission mode,
wherein the node (103) is a first node and the communications system (1) comprises a further node (104), and wherein the method furthermore comprises the following steps to be carried out by the first node:
sending a notification (505) in the first transmission mode to the further node, wherein the notification announces a data transmission in the second transmission mode;
and sending data (513) in the second transmission mode to the further node.

11. Method according to any of Claims 6 to 10, wherein the method additionally comprises the following step to be performed by the further node (104):
changing over from a first reception mode, in which only data sent in the first transmission mode can be received, to a second reception mode, in which data sent in the second transmission mode can be received.

12. Computer-readable medium or plurality of computer-readable media, on which instructions are stored which, if they are executed on a computer, carry out one of the methods from Claims 6 to 11.

13. Computer program comprising program code means for carrying out all the steps from any of Claims 6 to 11 if the program is executed on a computer.

## Revendications

1. Système de communication (1) comprenant au moins un noeud (101, 102, 110), une instance de commande (10) et un support de communication (11) commun,
l'au moins un noeud étant conçu pour recevoir des messages qui ont été ou sont envoyés dans un premier mode de transmission ;
l'instance de commande (10) étant en outre conçue pour définir un premier des noeuds,
afin de lui envoyer des données dans un deuxième mode de transmission ou pour libérer le support de communication (11) commun de telle sorte que le premier noeud envoie des données dans le deuxième mode de transmission,
et l'instance de commande (10) étant en outre conçue pour communiquer au premier noeud, au moyen d'un message (501, 502, 503, 504), qu'elle l'a défini,
ce message étant envoyé dans le premier mode de transmission ;
et
le deuxième mode de transmission possédant un débit de transmission de données et/ou une complexité de transmission supérieurs à ceux du premier,
le premier noeud étant conçu pour, après une réception du message, suivant le besoin,
envoyer des données vers l'instance de commande (10) dans le deuxième mode de transmission (510) ;
ou envoyer un message d'annonce (505) à un autre noeud (104) dans le système de communication dans le premier mode de transmission et envoyer les données suivantes dans le deuxième mode de transmission aux autres noeuds (513) ;
ou recevoir (512) des données qui ont été ou sont envoyées dans le deuxième mode de transmission.

2. Système de communication selon la revendication 1, la libération du support de communication commun en vue de l'envoi de données étant limitée dans le temps et prenant fin,
lorsque le premier noeud a envoyé des données dans le deuxième mode de transmission et ces données ont été communiquées (t₁, t₂, t₄) ;
ou lorsqu'une durée prédéfinie (ΔT₁) après l'envoi du message par l'instance de commande ou après une réception de ce message par le premier noeud s'est écoulée ;
lorsque le premier noeud a indiqué à l'instance de commande, dans un communiqué (510) au sein d'un délai prédéfini (ΔT₁), qu'il n'existe pas ou plus de besoin de l'utilisation du support de communication commun dans le deuxième mode de transmission ;
ou lorsque l'instance de commande donne un message correspondant au noeud.

3. Système de communication selon la revendication 1 ou 2, l'instance de commande sélectionnant le premier noeud en se basant sur une charge du support de communication commun et/ou en se basant sur un besoin indiqué par le premier noeud, tel que des exigences de temps réel ou une taille d'un message à envoyer.

4. Système de communication selon l'une des revendications précédentes, lequel possède au moins un deuxième noeud (110) qui est conçu pour recevoir des messages qui ont été envoyés dans le deuxième mode de transmission,
l'au moins un deuxième noeud possédant de préférence une alimentation en énergie (111) qui est séparée du support de communication commun.

5. Système de communication selon l'une des revendications précédentes, le premier mode de transmission comprenant une transmission de signal au moyen d'une modulation par déplacement de fréquence binaire non codée ;
et/ou le deuxième mode de transmission comprenant une transmission de signal au moyen d'un procédé de multiplexage par répartition orthogonale de la fréquence codé qui est de préférence combiné avec un chargement de bits adaptatif.

6. Procédé de communication dans un système de communication (1) comprenant
au moins deux noeuds (101, 102, 103),
une instance de commande (10) et
un support de communication (11) commun,
le procédé comprenant les étapes suivantes à exécuter par l'instance de commande :
définition d'un premier noeud ; et
envoi d'un message (501, 502, 503, 504) dans un premier mode de transmission au premier noeud, le message contenant des informations à propos du fait que l'instance de commande enverra au premier noeud des données dans un deuxième mode de transmission ; ou
que l'instance de commande libère le support de communication (11) commun pour le noeud en vue de l'envoi de données dans le deuxième mode de transmission ;
le deuxième mode de transmission autorisant un débit de transmission de données et/ou une complexité de transmission supérieurs à ceux du premier, le noeud (103) étant un premier noeud et le système de communication (1) comprenant un noeud supplémentaire (104), et le procédé comprenant en outre les étapes suivantes à exécuter par le premier noeud :
envoi d'un communiqué (505) dans le premier mode de transmission au noeud supplémentaire, le communiqué annonçant une transmission de données dans le deuxième mode de transmission ;
et envoi de données (513) au noeud supplémentaire dans le deuxième mode de transmission.

7. Procédé selon la revendication 6, comprenant en outre une ou plusieurs des étapes suivantes à exécuter par le premier noeud (101, 102, 103) :
envoi de données (510) à l'instance de commande (10) dans le deuxième mode transmission ;
réception (512) de données qui ont été envoyées par l'instance de commande dans le deuxième mode transmission ;
envoi (510) d'un deuxième message à l'instance de commande, le deuxième message indiquant que le premier noeud n'a aucun besoin ou plus aucun besoin d'utiliser le support de communication commun dans le deuxième mode de transmission.

8. Procédé selon la revendication 6 ou 7, la définition du premier noeud se basant sur une charge du support de communication commun et/ou sur un besoin indiqué par le premier noeud, tel que des exigences de temps réel ou une taille d'un message (511, 512, 513) à envoyer.

9. Procédé selon l'une des revendications 6 à 8, comprenant en plus l'étape suivante à exécuter par l'instance de commande (10) :
définition du fait qu'au moins un deuxième noeud peut recevoir en standard des données qui ont été envoyées dans le deuxième mode de transmission.

10. Procédé de communication dans un système de communication (1) comprenant
au moins deux noeuds (101, 102, 103),
une instance de commande (10) et
un support de communication (11) commun,
le procédé comprenant les étapes suivantes à exécuter par le noeud (101, 102, 103) :
réception d'un ou plusieurs messages (501, 502, 505) de la part de l'instance de commande ou d'un autre noeud dans le système de communication, le ou les plusieurs messages ayant été ou étant envoyés dans un premier mode de transmission au premier noeud et contenant des informations à propos du fait
que le noeud recevra des données qui sont envoyées dans un deuxième mode de transmission ; et/ou que le support de communication (11) commun est libéré pour le noeud en vue de l'envoi de données dans le deuxième mode de transmission ;
et réception de données (512, 513) envoyées dans le deuxième mode de transmission et/ou envoi (510, 5811, 513) de données dans le deuxième mode de transmission ; le deuxième mode de transmission autorisant un débit de transmission de données et/ou une complexité de transmission supérieurs à ceux du premier, le noeud (103) étant un premier noeud et le système de communication (1) comprenant un noeud supplémentaire (104), et le procédé comprenant en outre les étapes suivantes à exécuter par le premier noeud :
envoi d'un communiqué (505) dans le premier mode de transmission au noeud supplémentaire, le communiqué annonçant une transmission de données dans le deuxième mode de transmission ;
et envoi de données (513) au noeud supplémentaire dans le deuxième mode de transmission.

11. Procédé selon l'une des revendications 6 à 10, comprenant en plus l'étape suivante à exécuter par le noeud supplémentaire (104) :
basculement d'un premier mode de réception, dans lequel seules peuvent être reçues les données envoyées dans le premier mode de transmission, à un deuxième mode de réception dans lequel peuvent être reçues les données envoyées dans le deuxième mode de transmission.

12. Un ou plusieurs support(s) lisible(s) par ordinateur sur lequel/lesquels sont enregistrées des instructions qui, lorsqu'elles sont exécutées sur un ordinateur, mettent en oeuvre l'un des procédés des revendications 6 à 11.

13. Programme informatique comprenant des moyens de code de programme pour exécuter toutes les étapes de n'importe laquelle des revendications 6 à 11 lorsque le programme est exécuté sur un ordinateur.
